# EUROPÄISCHE PATENTSCHRIFT

(11) **EP 3 555 586 B1**
(45) Veröffentlichungstag und Bekanntmachung des Hinweises auf die Patenterteilung: **09.11.2022**
(21) Anmeldenummer: 17816389.5
(22) Anmeldetag: 29.11.2017
(51) Int. Cl.: G01M 9/04, A01G 25/00, F25C 1/00

(54) **VORRICHTUNG ZUR HERSTELLUNG VON WASSERTROPFEN BESTIMMTER GRÖSSE**
APPARATUS FOR PRODUCTION OF WATER DROPLETS OF DEFINED DIMENSIONS
APPAREIL DE PRODUCTION DE GOUTTELETTES D'EAU DE DIMENSIONS DEFINIES

(30) Priorität: 14.12.2016 AT 511412016
(43) Veröffentlichungstag der Anmeldung: 23.10.2019
(73) Patentinhaber: RTA Rail Tec Arsenal Fahrzeugversuchsanlage GmbH, 1210 Wien (AT)
(72) Erfinder: WANNEMACHER, Michael, 1210 Wien (AT)
(74) Vertreter: Babeluk, Michael
(86) Internationale Anmeldenummer: PCT/AT2017/060316
(87) Internationale Veröffentlichungsnummer: WO 2018/107191

(56) Entgegenhaltungen:
- CN-A- 102 636 327
- CN-U- 204 405 287
- CN-U- 204 405 288
- US-A1- 2004 093 912
- US-A1- 2013 239 670

## Beschreibung

Die Erfindung betrifft eine Vorrichtung zur künstlichen Herstellung von Regen-, Schnee- oder Vereisungsbedingungen, wobei sie ein Windkanal, Klimakammer oder Icing Wind Tunnel ist, umfassend eine Vorrichtung zur Herstellung von Wassertropfen bestimmter Größe in einem Strömungsquerschnitt der Vorrichtung zur künstlichen Herstellung von Regen-, Schnee- oder Vereisungsbedingungen mit mehreren auf einem Halterahmen in dem Strömungsquerschnitt verteilt angeordneten Sprühdüsen mit vorzugsweise unter Druck stehenden Wasserzuleitungen und vorzugsweise auch Gaszuleitungen.

Die oben genannten Bedingungen umfassen auch Wolkensimulationen und die dafür erforderliche Unterkühlung von Tröpfchen im flüssigen Zustand unter 0°C (super cooled drops).

Zu den wichtigsten Aufgabengebieten von wissenschaftlich und wirtschaftlich genutzten Vorrichtungen der oben beschriebenen Art, wie etwa Windkanälen, Klimakammern oder Icing Wind Tunneln gehört die Simulation von verschiedensten Wettersituationen bei unterschiedlichen Betriebsanforderungen beispielsweise an Verkehrsmittel, wie Straßenfahrzeuge oder Luftfahrzeuge. So werden etwa Vereisungs-, Schnee- und Regensituationen bei hoher Windgeschwindigkeit bzw. Bewegungsgeschwindigkeit untersucht. Sicherheitstechnisch stellen Vereisungsszenarien bei Flugzeugen diesbezüglich eine besonders wichtige Herausforderung dar, weil durch solche Vereisungen während des Flugs die Flugtauglichkeit des Flugzeugs stark beeinträchtigt werden kann. Daher ist die akkurate und möglichst genaue Wiedergabe von natürlichen Bedingungen essentiell für die Aussagekraft der Experimente. Wesentliche Parameter für die Simulation von Vereisung sind die Größe bzw. Größenverteilung der Tröpfchen, das flüssige Volumen in der Luft (liquid water content), sowie die Verteilung der Tröpfchen im beaufschlagten Querschnitt.

Die US 2013/0239670 A1, die CN 102 636 327 A oder die CN 204 405 288 U zeigen verschiedene Vorrichtungen, um Tropfen und Tröpfchen in einen Klimakanal verschiedener Größe zu erzeugen. Die Verteilung der Tröpfchen ist aber nicht ausreichend einstellbar.

Es sind schon Systeme bekannt, welche versuchen, die Größe der Tröpfchen so genau wie möglich einstellbar zu machen. So zeigt die CN 102 636 327 A zum Beispiel ein Düsensystem, welches mit piezoelektrischer Zerstäubung arbeitet. Aus der US 2013/0239670 A1 sind Regelsysteme bekannt, welche sich mit der Einstellung und Überwachung der Tröpfchengröße beschäftigen.

Abhängig von der gewünschten Größe der Tröpfchen und der Umgebungstemperatur kann es notwendig sein, Düsen zu verwenden, welche zusätzlich zur Flüssigkeitszufuhr eine Gaszufuhr besitzen. Diese Düsen, die meist mit Druckluft arbeiten, sind bereits bekannt.

Notwendig ist allerdings auch, die Verteilung der Tröpfchen innerhalb des beaufschlagten Querschnitts nach der Notwendigkeit des Experiments entsprechend gestalten zu können. Die Wichtigkeit der Verteilung zeigt sich schon daraus, dass die European Aviation Safety Agency diesbezüglich bei Vereisungstests von Flugzeugen eine möglichst homogene Verteilung der Tröpfchen im Querschnitt des Windkanals sowie eine möglichst genaue Einhaltung einer bestimmten Größenverteilung der Tröpfchen im Querschnitt sowie das flüssige Volumen in der Luft verlangt und nur sehr geringe Abweichungen zulässt.

Insbesondere die definierte Verteilung von Tröpfchen bestimmter Größe hat sich als schwierig herausgestellt. Es hat sich gezeigt, dass die Verteilung von kleineren Tröpfchen innerhalb des Strömungsquerschnittes aufgrund ihrer geringen Masse schon alleine durch die Windströmung genug verwirbelt werden. Allerdings trifft dies bei der Verwendung von größeren Tröpfchen, wie sogenannten "Super cooled large drops", die für die Simulation von gefrierendem Nebel oder Regen notwendig sind, nicht mehr zu. Wegen der großen Masse der Teilchen und damit verbundenen Trägheit werden diese nicht mehr ausreichend verwirbelt.

Die Frage der Verteilung der Tröpfchen innerhalb des beaufschlagten Querschnitts sowie der Größenverteilung wurde bis jetzt aber auf unzureichende Art behandelt. Üblicherweise werden Ein- oder Zweistoffdüsen in Matrizen oder anderen Formen in einem Strömungsquerschnitt angeordnet, um so eine möglichst homogene Verteilung (Distribution) zu gewährleisten. Dies liefert allerdings nicht immer zufriedenstellende Ergebnisse. Besonders die homogene Verteilung von großen bzw. auch unterkühlten Tröpfchen (super cooled large drops) stellt eine besondere Herausforderung dar.

Aufgabe der Erfindung ist deswegen zusätzlich zu den oben genannten Problemen, eine Vorrichtung, bzw. Verfahren zur Herstellung von Wassertropfen bestimmter Größe in einem Windkanal zur Simulation von Regen-, Schnee- oder Vereisungsbedingungen bzw. zur Durchführung von Wolkensimulationen mit mehreren in einem Strömungsquerschnitt verteilt angeordneter Sprühdüsen mit vorzugsweise unter Druck stehenden Wasserzuleitungen und vorzugsweise auch Gaszuleitungen bereitzustellen, mit der sich eine möglichst homogene Verteilung der Tröpfchen im Querschnitt sowie eine möglichst genaue Einhaltung einer bestimmten Größenverteilung unter Berücksichtigung der notwendigen Wasserkonzentration im beaufschlagtem Querschnitt bewirken lässt.

Dies wird dadurch erfüllt, dass mehrere Düsenträger an dem Halterahmen vorgesehen sind, die jeweils einen statischen Grundkörper und mindestens einen beweglichen Körper aufweisen und dass mindestens eine Sprühdüse auf dem beweglichen Körper sitzt.

Durch sich auf einer definierten Bahn bewegten Sprühdüsen wird die Tröpfchenmenge im Raum auf spezifische Art und Weise verteilt, wodurch sich je nach Drehgeschwindigkeit und Ausführungsform des beweglichen Körpers verschiedenste Verteilungsmuster ergeben können. Auch schwerere Tröpfchen werden dadurch in einem breiteren Feld verteilt und es wird die Bildung von unerwünschten Verteilungsabweichungen verhindert und eine homogene Verteilung begünstigt.

Außerdem wird durch die Bewegung der Düse die Wirkfläche im Strömungsquerschnitt pro bewegter Düse vergrößert. Dadurch sind mitunter nicht mehr so engmaschige Düsenanordnungen notwendig, was etwa auch den Strömungswiderstand der ganzen Anlage verringert und die Auslegungsmöglichkeiten für eine bestimmte Wasserkonzentration, vor allem eine geringere Anzahl von größeren Tröpfchen, im Volumen begünstigt.

Vorteilhaft ist auch die daraus resultierende bessere Versorgung der verkleidungsnahen Bereiche des Windkanalquerschnittes mit Tröpfchen. Dadurch kann der homogenisierte Bereich des Querschnittes besonders weit ausgedehnt werden.

Der bewegliche Körper kann unterschiedlich ausgeführt sein. So ist es möglich ihn als Schlitten zu realisieren, der entlang einer definierten Bahn fährt. Eine besonders einfache technische Ausführung ist jedoch ihn als Rotor auszuführen. Dadurch wird der Wirkbereich der Düsen stark vergrößert, der Luftwiderstand aber nur wenig erhöht.

Besonders günstig ist es, wenn der Rotor ein Armsegment besitzt, welcher sich im Wesentlichen radial von der Drehachse des Rotors erstreckt und auf dem die Sprühdüse sitzt, da so die Wirkfläche weiter vergrößert wird. Es sind Arme verschiedenster, vorzugsweise aerodynamischer, Formen denkbar. Es können sich zur weiteren Veränderung der Tröpfchenverteilung mehrere Düsen auf einen Rotor befinden, wodurch abhängig von ihren Anordnungen unterschiedliche Verteilungsprofile bewirkt werden können.

Prinzipiell kann auch der Winkel zwischen der Austrittsöffnung der Sprühdüse und der Strömungsrichtung variiert werden. Als besonders effektiv hat sich jedoch eine Ausrichtung von wenigstens der meisten Düsen in Strömungsrichtung erwiesen. Allerdings sind auch hier verschiedenste Muster möglich, zum Beispiel können die Sprühdüsen in Nähe der Außenwand eines Windkanals einen größeren Winkel aufweisen, während die Düsen im Inneren im Wesentlichen in Strömungsrichtung gerichtet sind.

Der Antrieb des Rotors kann aktiv oder passiv erfolgen. So kann die Bewegung bei geeigneter Formung des Rotors, beispielsweise ähnlich eines Rotorblattes eines Windrades, durch den generierten Wind der Anlage bewirkt werden. Vorteilhafter jedoch ist die aktive Bewegung des Rotors durch einen ihm zugeordneten Motor. Dadurch kann die Geschwindigkeit bzw. das Beschleunigungsverhalten unabhängig der Windgeschwindigkeit geregelt und sogar während eines Versuchs verändert werden.

Wird das Armsegment in seiner Größe oder Länge veränderbar, beispielsweise teleskopisch ausgeführt, so kann die Rotationsbahn, die die Sprühdüse in seiner Bewegung beschreibt, verändert werden. Dadurch können unterschiedlichste Rotationsbahnen für die Sprühdüsen entstehen. Insbesondere wenn die Größenänderung durch einen Antrieb betrieben wird, können so definierte Rotationsbahnen erzwungen werden.

Vorteilhaft ist, wenn wenigstens der statische Grundkörper strömungsoptimierte Form hat.

Für die Simulation von Wolken und somit Vereisungszenarien ist in der Regel kalte Umgebungsluft notwendig. Außerdem ist es erforderlich, die Tröpfchen zu unterkühlen (Temperaturen < 0°C) und wenn möglich so nah wie möglich an die Umgebungstemperatur anzugleichen, ohne dass diese ausfrieren sobald sie die Sprühdüse verlassen. Vor allem für große Tröpfchen ist es schwierig diese Unterkühlung zu erreichen. Eine Möglichkeit, welche diese Unterkühlung begünstigt, ist die dafür notwendige Wasserversorgung vorzukühlen. Gleichzeitig gilt es aber, ein vorzeitiges Einfrieren der Flüssigkeit in der Sprühdüse und damit verbundenes Verstopfen zu verhindern. Dadurch ist es meistens erforderlich, die Zuleitung zur Sprühdüse entsprechend zu temperieren. Je nach Versuchsanordnung bzw. Notwendigkeit kann es so sinnvoll sein, die Zuleitungen dafür beheizbar oder im Bereich von nahe 0°C temperierbar auszuführen. Oft ist es des Weiteren auch sinnvoll und notwendig, das Wasser bzw. Gas entsprechend aufzubereiten, wie zum Beispiel durch Deionisierung und Filterung des Wassers sowie Filterung der Luft von Öl und Partikeln, welche einen Kristallisationskeim darstellen können, um dadurch die Möglichkeit einer Unterkühlung des Wasser ohne vorzeitiges Ausfrieren zu erzielen.

Weiters kann vorgesehen sein, dass die Sprühdüsen und Düsenträger an einem Halterahmen zumindest teilweise gleichmäßig über den Strömungsquerschnitt verteilt sind.

Weiter gilt es nach dem Austritt der Tropfen durch die Vorrichtung zu rasche Geschwindigkeitserhöhungen von Tröpfchen, hervorgerufen z.B. durch zu rasche Erhöhung der Luftgeschwindigkeit nach dem Austritt aus der Düse oder Beschleunigung durch eine Kontraktionsdüse mit zu hoher Kontraktion zu vermeiden, um durch zu hohe Relativgeschwindigkeiten am Tropfen einer Zerteilung, vor allem von größeren Tröpfen (Sekundärzerstäubung oder secondary break up) entgegenzuwirken.

Es hat sich auch gezeigt, dass es zu besonders günstigen Tröpfchenverteilungen kommt, wenn sich die beweglichen Körper der Düsenträger synchron, gegebenenfalls mit definierter Phasenverschiebung bewegen.

Allerdings kann es auch, abhängig vom Aufbau der Versuchsanordnung und Einstellung der Versuchsparameter, vorteilhaft sein, wenn sich die beweglichen Körper der Düsenträger asynchron bewegen. Die Bewegungsbahnen können dabei gleich und sich nicht verändernd sein, beispielsweise kreisförmig, die beweglichen Körper können aber auch stochastische Bahnen beschreiben. Besonders vorteilhaft ist, wenn sich die Rotoren asynchron zueinander bewegen.

Vorrichtungen zur Herstellung von Wassertropfen bestimmter Größe der eben beschriebenen Art sind hauptsächlich dafür gedacht, in Windkanälen Anwendung zu finden. Solche Windkanäle besitzen in der Regel einen Windgenerator, oft ausgeführt in Form von Ventilatorsystemen, welche Luft in der zumindest großteils verschlossenen Verkleidung des Windkanals in eine Richtung bewegen. Vorzugsweise sind Kühl- oder Erwärmungsvorrichtungen eingebaut, welche die Luft im Windkanal auf die gewünschte Temperatur bringen. In der Regel sind stromaufwärts der Testsektion eine oder mehrere Kontraktionsdüsen, welche den Querschnitt des Windkanals verjüngen, um so die Windgeschwindigkeit zu erhöhen.

Diese Verjüngung kann durch eine gleichmäßige Verjüngung an allen Seiten des Kanals oder durch eine ungleichmäßige Verjüngung erfolgen. Eine besonders vorteilhafte Ausführungsweise ist, die Kontraktion durch Verjüngung an nur einer Begrenzungsfläche vorzunehmen. Dies beeinflusst auch die Flugbahn der Tröpfchen, was man positiv nutzen kann. So kann zum Beispiel eine einseitige Verjüngung an der Oberseite besonders vorteilig sein, da sich die Flugbahn schwererer Tröpfchen durch die Schwerkraft in Richtung Erdboden neigt. Ein zu schnelles Absinken der Tröpfchen und eine damit verbundene ungewollte Gradientenbildung wird dadurch verhindert.

Alternativ dazu können solche Vorrichtungen zur Herstellung von Wassertropfen bestimmter Größe auch für Standkammern oder temperierbare Hallen, als auch in Icing Wind Tunneln und Klima-Wind-Kanälen verwendet werden.

Das beschriebene Verfahren macht es möglich, den Wirkungsbereich der einzelnen Sprühdüse zu erweitern und damit ein anderes Sprühprofil zu ermöglichen. Es können stochastische Bahnen wünschenswert sein, es ist aber auch möglich elliptische oder rechteckige Bahnen zu produzieren. Je nach Versuchsanordnung kann so das Verteilungsprofil an die jeweiligen Anforderungen angepasst werden.

Bei Verwendung dieser Vorrichtung zur Herstellung von Wassertropfen bestimmter Größe in einer Kontraktionsdüse, um die Geschwindigkeit zu erhöhen, wie z.B. in Klima-Wind-Kanälen, Windkanälen oder Icing Wind Tunneln, ist es besonders vorteilhaft, wenn das Verhältnis der Breiten- und Höhenverjüngung der Kontraktionsdüse dem Verhältnis der Breitenerstreckung und Höhenerstreckung des Rotationsprofils entspricht. So können durch ungleich starke Höhen- und Breitenverjüngungen der Kontraktionsdüse entstandene Verzerrungen des Verteilungsprofils, wie zum Beispiel Stauchungen, kompensiert werden.

Besonders vorteilhaft ist, wenn stromaufwärts der beschriebenen Vorrichtung ein Strömungslenkungsgitter angeordnet ist. Damit können ungewollte Luftströmungen verhindert werden bzw. aktiv bestimmte Luftströmungen induziert werden, welche in Kombination mit der Vorrichtung zu einem bestimmten Verteilungsmuster führen.

In der Folge wird die vorliegende Erfindung anhand der in den Figuren dargestellten Ausführungsvarianten näher erläutert. Es zeigen:
- Fig. 1: einen Schnitt durch einen Düsenträger mit einer Düse;
- Fig. 2: mögliche Rotationsprofile von Düsen;
- Fig. 3: eine schematische Darstellung einer Variante eines Icing-WindTunnels;
- Fig. 4: eine Vorrichtung zur Herstellung von Wassertropfen bestimmter Größe.

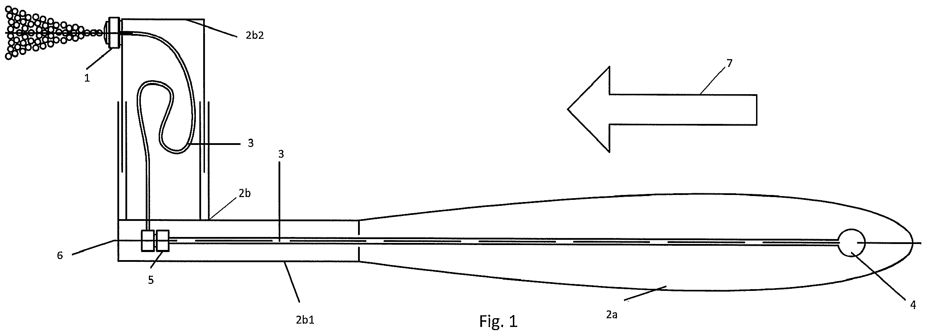

Im Schnitt Fig. 1 wird der Aufbau einer Ausführungsform des Düsenträgers 2 näher ersichtlich. Er besitzt einen statischen aerodynamisch geformten Grundkörper 2a und einen beweglichen Körper 2b in Form eines Rotors, wobei der bewegliche Körper 2b aus dem um die Drehachse 6 drehrunden Drehlager 2b1 und einem Armsegment 2b2 besteht. Das Armsegment 2b2 ist teleskopisch ausgeführt und die Sprühdüse 1 befindet sich auf ihm. Die Wasserzuleitung 3 verläuft im Inneren des Düsenträgers 2, er entspringt von einem Wasserverteilerrohr im Inneren des Halterahmens 4 und führt über eine Drehverbindung 5 zur Sprühdüse 1. Die Sprühdüse 1 ist am Ende des Armsegments 2b2 angebracht und zeigt in Strömungsrichtung 7. Der bewegliche Körper 2b ist über ein Getriebe (nicht eingezeichnet) mit dem statischen Grundkörper 2a gekoppelt. Das Getriebe bestimmt das Rotationsprofil.

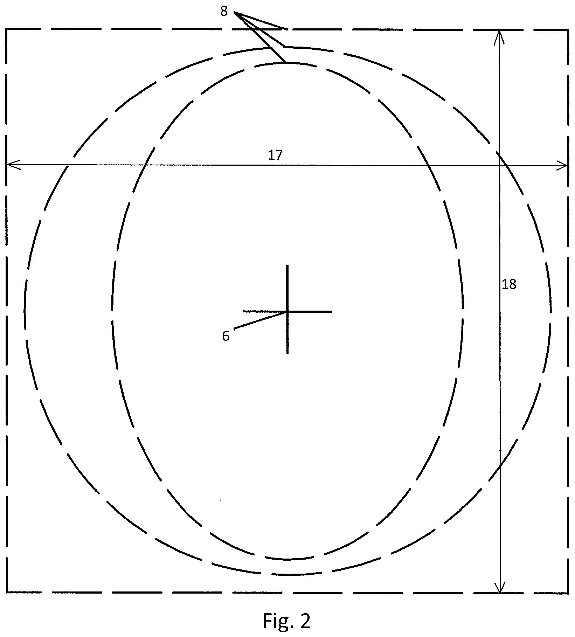

Fig. 2 zeigt eine Auswahl verschiedener Rotationsprofile 8. Es ist ein quadratisches, ein elliptisches und ein kreisrundes Profil dargestellt, wobei alle um die Drehachse 6 zentriert sind. Bei dem quadratischen Rotationsprofil 8 ist Breitenerstreckung 17 und Höhenerstreckung 18 gleich lang, das Verhältnis beträgt 1:1. Ein hier nicht dargestelltes rechteckiges Rotationsprofil ist aber ebenso möglich.

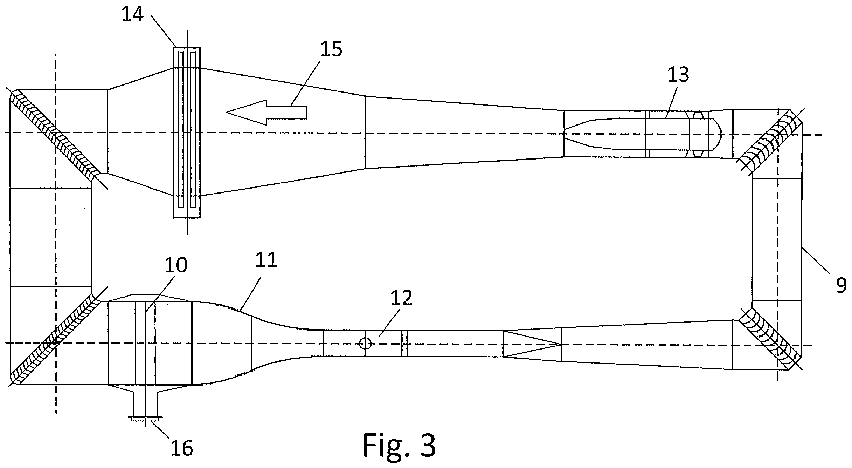

Fig. 3 stellt schematisch den Aufbau einer geschlossenen (Göttinger Bauart) Variante für einen Icing-Wind-Tunnel dar. Er besitzt eine Verkleidung 9, welche durchgehend verschlossen ist, nur an einer Stelle ist eine Öffnung 16 zur Begehung des Kanals vorgesehen. Eine Vorrichtung zur Herstellung von Wassertropfen bestimmter Größe 10 ist direkt vor der Kontraktionsdüse 11 angeordnet, der die Testzone 12 folgt. Die Kontraktionsdüse 11 ist so ausgeführt, dass sie sich auf beiden Seiten gleichmäßig verjüngt. Ein Ventilator 13 treibt den Luftstrom in die vorgesehene Richtung (Pfeil 15). Es ist außerdem eine Kühlvorrichtung 14 vorgesehen. Die Verkleidung 9 hat nicht durchgehend denselben Querschnitt. Abgesehen von der Kontraktionsdüse 11 sind eine Vielzahl von Erweiterungen und weniger stark ausgeführten Kontraktionsdüsen realisiert. So ist einerseits der Querschnitt möglichst eng um den Ventilator 13 angeordnet, um dessen Wirkungsgrad zu erhöhen, andererseits verbreitert sich der Querschnitt nach der Testzone 12 bzw. vor dem Kühlsystem 14.

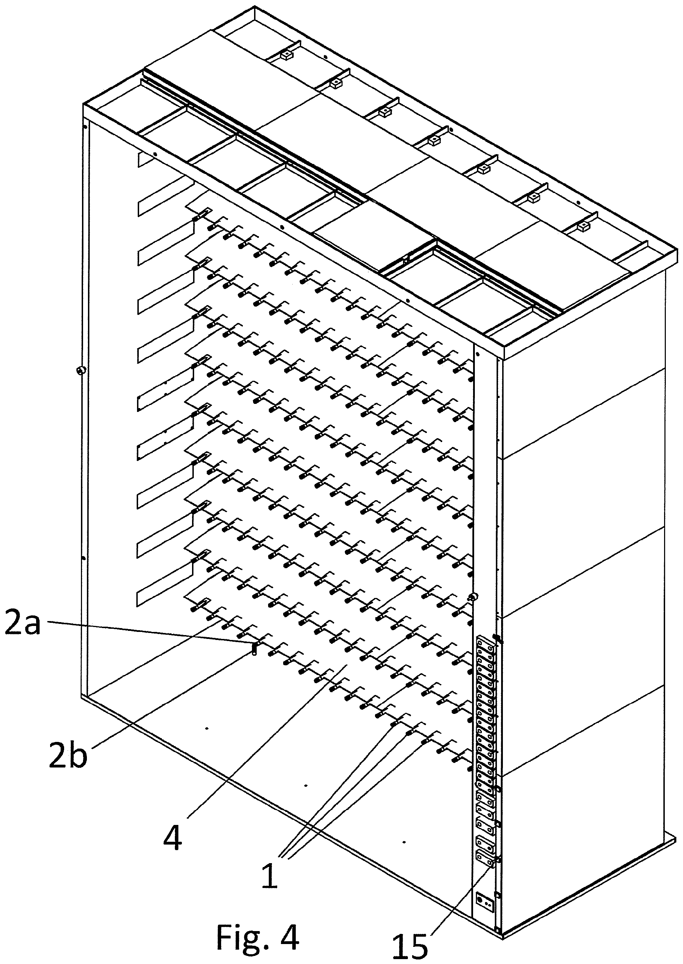

Fig. 4 stellt eine Vorrichtung 10 zur Herstellung von Wassertropfen bestimmter Größe dar, auf welchem mehrere Sprühdüsen 1 angebracht sind. Es handelt sich um eine Ausführungsform mit einer Matrizenanordnung der Sprühdüsen 1. Sie besitzt einen Mantel 15, die Düsenträger 2 sind zeilenweise an Halterahmen 4 aufgereiht. Im untersten Halterahmen ist eine Sprühdüse mit statischen Grundkörper 2a und beweglichen Rotor 2b dargestellt. Auf letzterem sitzt Düse 1.

## Patentansprüche

1. Vorrichtung zur künstlichen Herstellung von Regen-, Schnee- oder Vereisungsbedingungen, wobei sie ein Windkanal, Klimakammer oder Icing Wind Tunnel ist, umfassend eine Vorrichtung zur Herstellung von Wassertropfen bestimmter Größe (10) in einer Vorrichtung zur künstlichen Herstellung von Regen-, Schnee- oder Vereisungsbedingungen, mit mehreren auf einem Halterahmen (4) in dem Strömungsquerschnitt verteilt angeordneten Sprühdüsen (1) mit vorzugsweise unter Druck stehenden Wasserzuleitungen (3) und vorzugsweise auch Gaszuleitungen, **dadurch gekennzeichnet, dass** mehrere Düsenträger (2) an dem Halterahmen (4) vorgesehen sind, die jeweils einen statischen Grundkörper (2a) und mindestens einen vorzugsweise über ein Getriebe gekoppelten beweglichen Körper (2b) aufweisen und dass mindestens eine Sprühdüse (1) auf dem beweglichen Körper (2b) sitzt.

2. Vorrichtung nach Anspruch 1, **dadurch gekennzeichnet, dass** der bewegliche Körper (2b) ein um eine Drehachse (6) drehbarer Rotor ist.

3. Vorrichtung nach Anspruch 2, **dadurch gekennzeichnet, dass** der bewegliche Körper (2b) ein Armsegment (2b2) besitzt, das sich im Wesentlichen radial von der Drehachse (6) erstreckt und an dem die Sprühdüse (1) sitzt.

4. Vorrichtung nach einem der Ansprüche 2 oder 3, **dadurch gekennzeichnet, dass** zumindest ein Teil der Sprühdüsen (1) im Wesentlichen parallel zur Drehachse (6) gerichtet sind.

5. Vorrichtung nach einem der Ansprüche 2 bis 4, **dadurch gekennzeichnet, dass** dem Rotor ein Antrieb zugeordnet ist, der ihn mit definierter Geschwindigkeit bzw. Drehzahl antreibt.

6. Vorrichtung nach einem der Ansprüche 3 bis 5, **dadurch gekennzeichnet, dass** das Armsegment (2b2) in seiner Länge veränderbar ist.

7. Vorrichtung nach einem der Ansprüche 1 bis 6, **dadurch gekennzeichnet, dass** die Wasserzuleitung (3) bzw. Gaszuleitung temperierbar ist.

8. Vorrichtung nach einem der Ansprüche 1 bis 7, **dadurch gekennzeichnet, dass** sich die Rotoren synchron, gegebenenfalls mit einer bestimmten Phasenverschiebung zueinander bewegen.

9. Vorrichtung nach einem der Ansprüche 1 bis 8, **dadurch gekennzeichnet, dass** der Windkanal, Klimakammer oder Icing Wind Tunnel einen Windgenerator (13), eine zumindest großteils geschlossenen Verkleidung (9), einer Testsektion (12), vorzugsweise mindestens eine Kontraktionsdüse (11) und vorzugsweise eine Luftkühlungs- bzw. Lufterwärmungsvorrichtung (14) aufweist

10. Vorrichtung nach Anspruch 9, **dadurch gekennzeichnet, dass** sich die Kontraktionsdüse (11) nur an einer Oberseite verjüngt.

11. Vorrichtung nach Anspruch 9 oder 10, **dadurch gekennzeichnet, dass** stromaufwärts der Vorrichtung zur Herstellung von Wassertropfen bestimmter Größe (10) ein Strömungslenkungsgitter angeordnet ist.

12. Verfahren zur Herstellung von Wassertropfen bestimmter Größe in einem Windkanal zur Simulation von Regen- Schnee- oder Vereisungsbedingungen mit mehreren in einem Strömungsquerschnitt verteilt angeordneten Sprühdüsen (1) mit Wasserzuleitungen (3) und vorzugsweise auch Gaszuleitungen, **dadurch gekennzeichnet, dass** sich zumindest mehrere Sprühdrüsen (1) auf einer Rotationsbahn (8) bewegen.

13. Verfahren nach Anspruch 12, **dadurch gekennzeichnet, dass** die Rotationsbahn (8) elliptisch ist.

14. Verfahren nach einem der Ansprüche 12 oder 13, **dadurch gekennzeichnet, dass** die Rotationsbahn (8) im Wesentlichen senkrecht zur Strömungsrichtung (15) ist.

15. Verfahren nach einem der Ansprüche 12 bis 14, **dadurch gekennzeichnet, dass** die Rotationsbahn (8) eine Breitenerstreckung (17) und eine Höhenerstreckung (18) hat, und dass das Verhältnis der Breiten- und Höhenverjüngung der Kontraktionsdüse (11) dem Verhältnis dieser Breitenerstreckung (17) und Höhenerstreckung (18) entspricht.

## Claims

1. Device for artificially producing rain, snow or icing conditions, wherein it is a wind tunnel, climate chamber or icing wind tunnel, comprising a device for producing water droplets of a specific size (10) in a device for artificially producing rain, snow or icing conditions, having a plurality of spray nozzles (1) arranged in a distributed manner on a retaining frame (4) in the flow cross-section with preferably pressurized water supply lines (3) and preferably also gas supply lines, **characterised in that** a plurality of nozzle carriers (2) are provided on the retaining frame (4), each having a static main body (2a) and at least one movable body (2b) preferably coupled via a gear unit, and **in that** at least one spray nozzle (1) is seated on the movable body (2b).

2. Device according to claim 1, **characterised in that** the movable body (2b) is a rotor rotatable about an axis of rotation (6).

3. Device according to claim 2, **characterised in that** the movable body (2b) has an arm segment (2b2) which extends substantially radially from the axis of rotation (6) and on which the spray nozzle (1) is seated.

4. Device according to one of claims 2 or 3, **characterised in that** at least part of the spray nozzles (1) are directed substantially parallel to the axis of rotation (6).

5. Device according to one of claims 2 to 4, **characterised in that** the rotor is assigned a drive which drives it at a defined speed or rotational speed.

6. Device according to one of claims 3 to 5, **characterised in that** the arm segment (2b2) is variable in its length.

7. Device according to one of the claims 1 to 6, **characterised in that** the water supply line (3) or gas supply line can be temperature-controlled.

8. Device according to one of the claims 1 to 7, **characterised in that** the rotors move synchronously, optionally with a certain phase shift to each other.

9. Device according to one of the claims 1 to 8, **characterised in that** the wind tunnel, climate chamber or icing wind tunnel comprises a wind generator (13), an at least largely closed casing (9), a test section (12), preferably at least one contraction nozzle (11) and preferably an air cooling or air heating device (14).

10. Device according to claim 9, **characterised in that** the contraction nozzle (11) tapers only on an upper side.

11. Device according to claim 9 or 10, **characterised in that** a flow deflection grid is arranged upstream of the device for producing water droplets of a certain size (10).

12. Method for producing water droplets of a certain size in a wind tunnel for simulating rain, snow or icing conditions, comprising a plurality of spray nozzles (1) arranged in a distributed manner in a flow cross-section and having water supply lines (3) and preferably also gas supply lines, **characterised in that** at least a plurality of spray nozzles (1) move on a rotational path (8).

13. Method according to claim 12, **characterised in that** the rotational path (8) is elliptical.

14. Method according to one of claims 12 or 13, **characterised in that** the rotational path (8) is substantially perpendicular to the flow direction (15).

15. Method according to one of claims 12 to 14, **characterised in that** the rotational path (8) has a width extension (17) and a height extension (18), and **in that** the ratio of the width and height taper of the contraction nozzle (11) corresponds to the ratio of this width extension (17) and height extension (18).

## Revendications

1. Dispositif pour créer de manière artificielle des conditions de pluie, de neige ou de givre, dispositif installé dans un tunnel de soufflerie, une chambre d'essai climatique ou un tunnel de givrage comprenant un dispositif (10) pour produire des gouttes d'eau de dimensions déterminées dans un dispositif de production artificielle de conditions de pluie, de neige ou de givre avec plusieurs buses de pulvérisation (1) installées de manière répartie sur un châssis de support (4) dans la section de passage, avec, de préférence, des conduites (3) d'alimentation en eau sous pression et de préférence également des conduites de gaz,
dispositif **caractérisé en ce que**
le châssis de support (4) comporte plusieurs supports de buse (2), comportant respectivement un corps de base (2a) fixe et au moins un corps mobile (2b) couplé de préférence par une transmission, et
- au moins une buse de pulvérisation (1) est montée sur le corps mobile (2b).

2. Dispositif selon la revendication 1,
**caractérisé en ce que**
le corps mobile (2b) est un rotor tournant autour d'un axe de rotation (6).

3. Dispositif selon la revendication 2,
**caractérisé en ce que**
le corps mobile (2b) comporte un segment de bras (2b2) qui s'étend pratiquement radialement par rapport à l'axe de rotation (6) et porte la buse de pulvérisation (1).

4. Dispositif selon l'une des revendications 2 ou 3,
**caractérisé en ce que**
au moins une partie des buses de pulvérisation (1) sont orientées pratiquement parallèlement à l'axe de rotation (6).

5. Dispositif selon l'une des revendications 2 à 4,
**caractérisé en ce que**
le rotor comporte un entraînement qui l'entraîne à une vitesse définie, c'est-à-dire une vitesse de rotation définie.

6. Dispositif selon l'une des revendications 3 à 5,
**caractérisé en ce que**
le segment de bras (2b2) est de longueur réglable.

7. Dispositif selon l'une des revendications 1 à 6,
**caractérisé en ce que**
la conduite d'alimentation en eau (3) ou la conduite de gaz sont mises en température.

8. Dispositif selon l'une des revendications 1 à 7,
**caractérisé en ce que**
les rotors sont mobiles en synchronisme, le cas échéant avec un certain déphasage.

9. Dispositif selon l'une des revendications 1 à 8,
**caractérisé en ce que**
le canal de soufflerie, la chambre d'essai climatique ou le tunnel de givrage, comportent un ventilateur (13), un habillage (9) au moins en grande partie fermé, une section d'essai (12), de préférence au moins une buse de contraction (11) et de préférence un dispositif de refroidissement d'air ou de chauffage d'air (14).

10. Dispositif selon la revendication 9,
**caractérisé en ce que**
la buse de contraction (11) ne se réduit que sur son côté haut.

11. Dispositif selon la revendication 9 ou 10,
**caractérisé par**
une grille de guidage de la veine en aval du dispositif de production de gouttes d'eau d'une certaine taille (10).

12. Procédé de production de gouttes d'eau d'une certaine taille dans un canal de soufflerie pour simuler des conditions de pluie, de neige ou de givre avec plusieurs buses de pulvérisation (1) réparties dans la section de passage avec des conduites d'alimentation en eau (3) et de préférence également des conduites d'alimentation en gaz,
procédé **caractérisé en ce que**
au moins plusieurs buses de pulvérisation (1) se déplacent sur une trajectoire de rotation (8).

13. Procédé selon la revendication 12,
**caractérisé en ce que**
la trajectoire de rotation (8) est elliptique.

14. Procédé selon l'une des revendications 12 ou 13,
**caractérisé en ce que**
la trajectoire de rotation (8) est pratiquement perpendiculaire à la direction de la veine (15).

15. Procédé selon l'une des revendications 12 à 14,
**caractérisé en ce que**
la trajectoire de rotation (8) a une extension en largeur (17) et une extension en hauteur (18) et le rapport entre le rétrécissement en largeur et en hauteur de la buse de contraction (11) est dans un rapport de cette extension en largeur (17) et cette extension en hauteur (18).
